# FASCICULE DE BREVET EUROPEEN

(11) **EP 3 043 955 B1**
(45) Date de publication et mention de la délivrance du brevet: **02.01.2019**
(21) Numéro de dépôt: 14780612.9
(22) Date de dépôt: 11.09.2014
(51) Int. Cl.: B23Q 1/00, B23B 45/00

(54) **MACHINE DE PERCAGE FRAISURAGE, NOTAMMENT POUR DES PIECES COMPOSANT DES STRUCTURES D'AVION**
BOHR- UND SENKMASCHINE, INSBESONDERE FÜR EINZELTEILE VON FLUGZEUGSTRUKTUREN
DRILLING AND COUNTERSINKING MACHINE, IN PARTICULAR FOR COMPONENT PARTS OF AIRCRAFT STRUCTURES

(30) Priorité: 12.09.2013 FR 1358785
(43) Date de publication de la demande: 20.07.2016
(73) Titulaire: Fives Machining, 46400 Saint-Laurent-les-Tours (FR)
(72) Inventeur: NICAISE, Jean-Pierre, F-46400 Saint Jean Lagineste (FR)
(74) Mandataire: Lavoix
(86) Numéro de dépôt international: PCT/IB2014/064424
(87) Numéro de publication internationale: WO 2015/036951

(56) Documents cités:
- EP-A1- 1 314 501
- WO-A1-2009/108093
- US-A- 5 791 836

## Description

L'invention est relative à une machine de perçage fraisurage portative, notamment pour pièces composant des structures d'avion, telles que cellules, ailes, cabine.

Ces machines sont utilisées principalement par des opérateurs comme machines portatives, mais peuvent être portées et positionnées sur les structures par des robots.

La plupart des machines de perçage sont équipées de moteurs pneumatiques assurant la rotation de la broche de perçage ainsi que les différents mouvements d'avance de la broche. Une machine de ce type est montrée par FR 2 680 329, qui prévoit un moteur pneumatique pour la rotation de la broche, et un moteur électrique pour les mouvements d'avance nécessitant moins de puissance.

Certaines machines sont équipées de moteurs de broche électriques d'une puissance suffisante, généralement supérieure à 500 watts et pouvant atteindre 2000 watts et plus. Ces moteurs électriques de broches, du fait de leur puissance, sont pilotés à distance par des systèmes de puissance et de commande déportés. La gestion des cycles, des paramètres d'asservissement, des liaisons avec les capteurs ou les différents actionneurs, est ainsi déportée dans des coffrets séparés de la machine.

Ces systèmes déportés sont encombrants et nécessitent des liaisons multiples avec la machine ; ces liaisons peuvent s'étendre sur de grandes longueurs, de plusieurs mètres ou dizaines de mètres, conduisant à des problématiques de stabilité des signaux, aussi bien pour la puissance que pour la commande, et de respect des réglementations de sécurité électrique.

Il est nécessaire de prendre en compte la protection des opérateurs et des éléments d'alimentation. US 5,791,836 montre une machine comprenant les caractéristiques du préambule de la revendication 1.

L'invention a pour but, surtout, de fournir une machine de perçage fraisurage portative performante, qui soit d'une utilisation plus pratique.

Une machine de perçage et fraisurage, notamment de pièces composant des structures d'avions, selon l'invention, comprend des moteurs électriques alimentés par une partie puissance et pilotés par une partie commande, ladite machine étant raccordée à une alimentation générale, et est caractérisée en ce que la partie puissance et la partie commande sont solidaires de la machine et en ce que l'alimentation générale est dissociée de la machine.

La partie puissance assure la fourniture au moteur de broche de signaux électriques de puissance appropriés, établis à partir du courant fourni par l'alimentation générale. Le moteur d'avance est aussi alimenté par la partie puissance.

La partie commande intègre la logique de pilotage de la machine pour ses différents modes de marche.

La machine peut être reliée à l'alimentation générale par un connecteur à démontage rapide, rendant la machine facilement dé-connectable de l'alimentation générale. La machine peut être raccordée indifféremment à différentes alimentations générales.

De préférence, les moteurs électriques de la machine sont de type brushless (sans balai).

Avantageusement, la machine est reliée à un boîtier d'alimentation externe comportant un coffret d'alimentation électrique générale prévu pour être branché sur le réseau électrique, en courant alternatif, et pour fournir en sortie une tension continue élevée pour la puissance et une tension continue basse pour la commande, et le module de puissance est propre à fournir des signaux de courant de puissance, notamment des signaux triphasés, à partir du courant continu sous tension élevée provenant du coffret.

La machine peut être reliée au boîtier d'alimentation externe par un seul câble commun de liaison, intégrant un câble de liaison électrique avec des conducteurs haute tension continue pour la puissance, et des conducteurs basse tension pour la commande, ainsi qu'un câble de liaison pneumatique branché sur une prise de fourniture d'air comprimé.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une vue de côté d'une machine selon l'invention avec parties arrachées, reliée au boîtier d'alimentation générale.
Fig.2 est une vue en perspective de trois-quarts arrière gauche de la machine avec parties arrachées, et

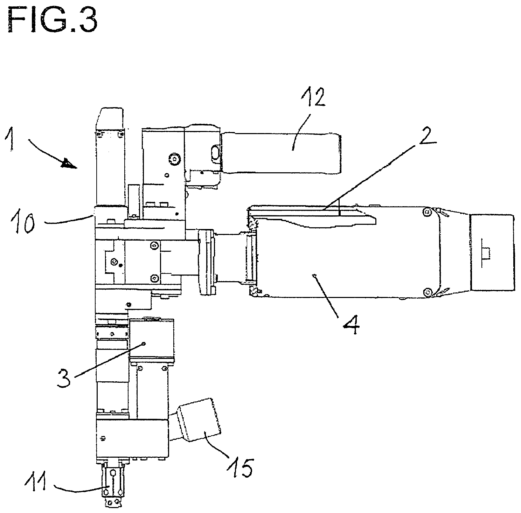

Fig.3 est une vue de côté à plus grande échelle de la machine avec parties arrachées.

En se reportant aux dessins, on peut voir une machine de perçage fraisurage 1, selon l'invention, qui présente une architecture dont la partie puissance et la partie contrôle sont entièrement intégrées à la machine.

Cette architecture se compose de quatre principaux éléments, dont deux sont intégrés sur la machine de perçage 1, et deux autres sont déportés.

Les deux éléments intégrés sur la machine de perçage 1 comprennent :
- un module de puissance 2, constituant la partie puissance, pour l'alimentation simultanée de deux moteurs électriques 3, 4 et d'un moteur additionnel optionnel ;
- un module de commande 5, constituant la partie contrôle, qui gère la totalité des fonctions machine :
   - le séquencement du fonctionnement de la machine
   - l'Interface Homme - Machine (Départ cycle, paramétrage, etc...)
   - l'enregistrement des données du processus
   - un dispositif de géo localisation (Puce GPS ou RFID).

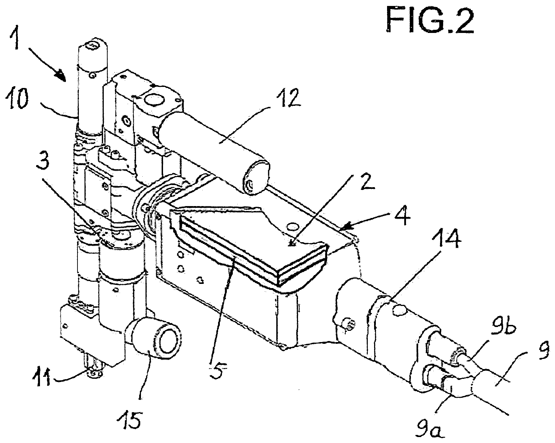

Les modules de puissance 2 et de commande 5 peuvent être localisés sur une même carte ou sur deux cartes électroniques distinctes, comme illustré sur Fig.2.

Deux autres éléments de l'architecture sont déportés hors de la machine, sur le réseau électrique 6 de l'utilisateur, et comprennent :
- un boîtier d'alimentation externe 7, simple à connecter et peu encombrant. Le boîtier comporte un coffret 8 d'alimentation électrique générale prévu pour être branché sur le réseau électrique 6, généralement en courant alternatif sous tension 230V AC, et pour fournir en sortie une tension continue élevée, notamment de 350VDC, et une tension continue basse, notamment de 24VDC pour la commande,
- un seul câble commun de liaison 9, intégrant un câble de liaison électrique 9a avec des conducteurs haute tension continue pour la puissance, et des conducteurs basse tension pour la commande, ainsi qu'un câble de liaison pneumatique 9b branché sur une prise 9c de fourniture d'air sec comprimé, notamment sous 6,5 bars.

La machine de perçage 1 comporte un carter 10 dans lequel est montée rotative une broche 11 qui peut être déplacée en translation, selon la direction de son axe géométrique, suivant un mouvement d'avance ou de recul, par le moteur 3, disposé avec son axe parallèle à la broche, et par un mécanisme de transmission.

Le moteur électrique de puissance 4 est disposé, selon l'exemple représenté, à angle droit du carter, avec transmission mécanique à renvoi d'angle pour entraîner la broche 11 en rotation. Une poignée 12 de manoeuvre est disposée au-dessus du moteur 4.

Le moteur 4, ainsi que le moteur 3, sont avantageusement des moteurs de type « brushless » ou sans balai, fonctionnant avec des signaux de courant de puissance, notamment triphasés. Le module de puissance 2 est propre à fournir les signaux de courant de puissance à partir du courant continu haute tension provenant du coffret 8.

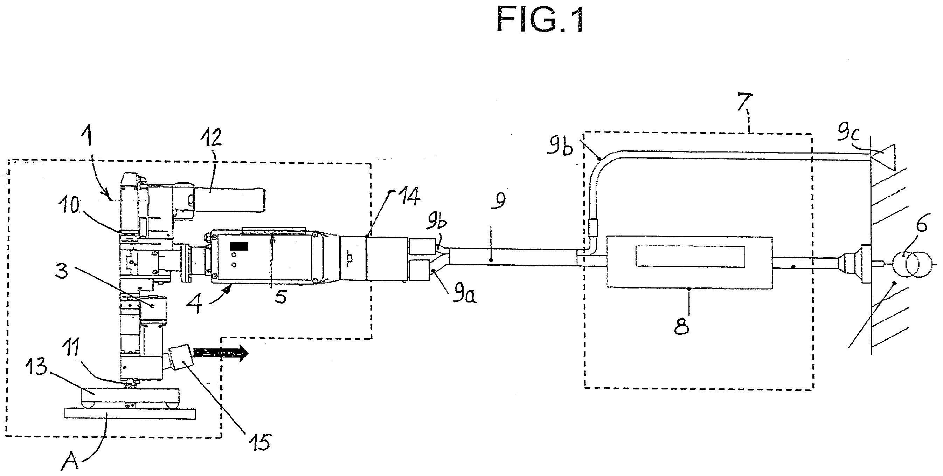

La machine 1 est positionnée avec précision, sur une pièce A (Fig.1) à percer, à l'aide d'une grille de perçage 13, constituant un gabarit. La grille 13 est positionnée et fixée avec précision sur la pièce A. Des moyens, non représentés, sont prévus pour la fixation de la machine 1 sur la grille 13, avec la broche 11 correctement orientée, notamment orthogonale à la surface en regard de la pièce A.

Un connecteur 14 à démontage rapide est prévu sur la machine 1 pour raccordement au câble 9. Une distribution d'air comprimé est assurée dans la machine 1, à partir du câble pneumatique 9b, notamment pour le refroidissement des moteurs et/ou un pilotage pneumatique auxiliaire et/ou un enclenchement de boîte de vitesse. Un ajutage 15 est prévu, au voisinage de l'extrémité inférieure de la broche munie d'un outil, pour l'aspiration des copeaux en étant relié à une source de dépression.

Ainsi, selon l'invention, la machine 1 de perçage et/ou fraisurage, notamment de pièces composant des structures d'avions, comprend pour l'entraînement de la broche le moteur électrique de puissance 4 alimenté par une partie puissance 2. Cette partie, ou module, puissance 2 est intégrée dans la machine et assure la fourniture des signaux électriques de puissance à partir d'une alimentation continue haute tension de l'ordre de 350VDC, fournie par le coffret d'alimentation déporté 7. L'autre moteur électrique 3, de moindre puissance, assure le mouvement d'avance et de recul de la broche. Les moteurs électriques 3 et 4 sont pilotés par la partie commande 5 également intégrée à la machine. La partie puissance 4 et la partie commande 5 sont donc solidaires de la machine 1, et l'alimentation générale 7 est dissociée de la machine 1.

La partie commande 5 intègre la logique de pilotage de la machine 1 pour ses différents modes de marche. La machine 1 est facilement déconnectable de l'alimentation générale 7, grâce au connecteur rapide 14.

La machine peut être raccordée indifféremment à différentes alimentations générales 7, dans la mesure où les caractéristiques de sortie des alimentations correspondent à celles d'entrée de la machine.

La machine selon l'invention présente de nombreux avantages, dont les suivants :
- La machine est autonome et se branche facilement sur le secteur électrique et le réseau d'air sans précautions particulières.
- Amélioration de la sécurité de l'utilisateur et de la stabilité des signaux par l'utilisation d'un seul câble comprenant un nombre de liaisons réduites.
- Tous les paramètres (processus et cycles) sont propres à la machine, chargés et enregistrés sur celle-ci, en particulier sur le module commande 5, via un port USB ou RJ 45.
- La traçabilité des données de processus est facilitée par l'enregistrement des données sur les modules de commande 5 de chaque machine :
   Contrôle du couple
   Contrôle de l'effort
   Compteurs (N° de trou et date par exemple)
   Géo localisation des opérations effectuées.
- L'utilisation des machines est facilitée par une interface homme / machine intégrée au module de commande 5 et identique pour les différentes versions de machine (électromécanique, pneumatique, entièrement électrique) possibles.

## Revendications

1. Ensemble comprenant :
- une machine (1) de perçage et fraisurage, notamment de pièces composant des structures d'avions, comprenant des moteurs électriques (3,4)
- une partie puissance (2) alimentant les moteurs électriques (3,4),
- une partie commande (5) pilotant les moteurs électriques (3,4),
- un boîtier d'alimentation externe (7) relié à la machine (1),
**caractérisé en ce que**:
- le boîtier d'alimentation externe (7) comprend un coffret (8) d'alimentation électrique générale prévu pour être branché sur un réseau électrique (6),
- la partie puissance (2) et la partie commande (3) sont solidaires de la machine (1),
- le boîtier d'alimentation externe (7) est dissocié de la machine (1), et
- la partie puissance (2) et la partie commande (5) sont localisées sur au moins une carte électronique intégrée sur la machine (1).

2. Ensemble selon la revendication 1, **caractérisé en ce que** la partie commande (5) intègre la logique de pilotage de la machine (1) pour ses différents modes de marche.

3. Ensemble selon la revendication 1, **caractérisé en ce que** la machine (1) comporte un connecteur à démontage rapide (14), la rendant facilement déconnectable de l'alimentation générale.

4. Ensemble selon la revendication 1, **caractérisé en ce que** la machine (1) peut être raccordée indifféremment à différentes alimentations générales.

5. Ensemble selon la revendication 1, **caractérisé en ce que** les moteurs électriques (3,4) sont de type « brushless ».

6. Ensemble selon la revendication 5, **caractérisé en ce que** le coffret (8) d'alimentation électrique générale est prévu pour être branché sur le réseau électrique (6), en courant alternatif, et pour fournir en sortie une tension continue élevée pour la puissance et une tension continue basse pour la commande, et la partie puissance (2) est propre à fournir des signaux de courant triphasé de puissance à partir du courant continu sous tension élevée provenant du coffret (8).

7. Ensemble selon la revendication 6, **caractérisé en ce que** la machine (1) est reliée au boîtier d'alimentation externe (7) par un seul câble commun de liaison (9), intégrant un câble de liaison électrique (9a) avec des conducteurs haute tension continue pour la puissance, et des conducteurs basse tension pour la commande, ainsi qu'un câble de liaison pneumatique (9b) branché sur une prise de fourniture d'air comprimé.

## Patentansprüche

1. Einheit, aufweisend:
- eine Bohr- und Senkmaschine (1), insbesondere von Luftfahrzeugstrukturteilen, welche Elektromotoren (3, 4) aufweist,
- einen Leistungsteil (2), welcher die Elektromotoren (3, 4) versorgt,
- einen Steuerungsteil (5), welcher die Elektromotoren (3, 4) steuert,
- eine externe Versorgungseinheit (7), welche mit der Maschine (1) verbunden ist,
**dadurch gekennzeichnet, dass**
- die externe Versorgungseinheit (7) ein allgemeines Elektroversorgungsgerät (8) aufweist, welches vorgesehen ist, um an ein Stromnetz (6) angeschlossen zu sein,
- der Leistungsteil (2) und der Steuerungsteil (5) mit der Maschine (1) fest verbunden sind und
- der Leistungsteil (2) und der Steuerungsteil (5) auf zumindest einer elektrischen Platine angeordnet sind, welche in der Maschine (1) integriert ist.

2. Einheit gemäß Anspruch 1, **dadurch gekennzeichnet, dass** der Steuerungsteil (5) die Steuerlogik der Maschine (1) für ihre verschiedenen Betriebsmodi integriert hat.

3. Einheit gemäß Anspruch 1, **dadurch gekennzeichnet, dass** die Maschine (1) einen Verbinder (14) zum schnellen Trennen aufweist, welcher eine leichte Trennung von der allgemeinen Versorgung ermöglicht.

4. Einheit gemäß Anspruch 1, **dadurch gekennzeichnet, dass** die Maschine (1) gleichermaßen an verschiedene allgemeine Versorgungen anschließbar ist.

5. Einheit gemäß Anspruch 1, **dadurch gekennzeichnet, dass** die Elektromotoren (3, 4) vom bürstenlosen Typ sind.

6. Einheit gemäß Anspruch 5, **dadurch gekennzeichnet, dass** das allgemeine Elektroversorgungsgerät (8) vorgesehen ist, um am Wechselstrom-Stromnetz (6) angeschlossen zu sein und um am Ausgang eine hohe Gleichspannung für die Leistung und eine niedrige Gleichspannung für das Steuern zu liefern, und der Leistungsteil (2) in der Lage ist, Dreiphasenstrom-Leistungssignale aus dem Gleichstrom mit hoher Gleichspannung zu liefern, welcher vom Gerät (8) stammt.

7. Einheit gemäß Anspruch 6, **dadurch gekennzeichnet, dass** die Maschine (1) mit der externen Versorgungseinheit (7) durch eine einzelne gemeinsame Verbindungsleitung (9) verbunden ist, welche eine elektrische Verbindungsleitung (9a) mit Hochspannungsleiter, die für die Leistung durchgängig sind, und Niederspannungsleiter für die Steuerung integriert hat, und auch eine Pneumatik-Verbindungsleitung (9b), welche mit einem Anschluss zum Bereitstellen komprimierter Luft verbunden ist.

## Claims

1. Assembly comprising :
- a drilling and milling machine (1) notably for parts making up airplane structures, comprising electric motors (3, 4)
- a power part (2) supplying the electric motors (3, 4),
- a control part (5) controlling the electric motors (3 ,4),
**characterized in that** :
- the assembly also includes a power supply box (7) connected to the machine (1),
- the power supply box (7) includes a general power supply box (8) designed to be connected to an electrical network (6),
- the power portion (2) and the control portion (3) are integral with machine (1),
- the power supply box (7) is dissociated from the machine (1),
- the power part (2) and the control part (5) are located on at least one electronic board integrated on the machine (1).

2. The assembly according to claim 1, **characterized in that** the control portion (5) integrates the logic for driving the machine (1) for its different operating modes.

3. The assembly according to claim 1, **characterized in that** the machine (1) includes a fast disconnecting connector (14), making it easily disconnectable from the general power supply (7).

4. The assembly according to claim 1, **characterized in that** the machine (1) is able to be equally connected to various general power supplies (4).

5. The assembly according to claim 1, **characterized in that** the electric motors (3, 4) are of the "brushless" type.

6. The assembly according to claim 5, **characterized in that** the machine (1) is connected to an external power supply casing (7) including a general electric power supply box (8) provided so as to be connected on the electric mains (6), with alternating current, and for providing at the output a high DC voltage for the power and a low DC voltage for the control, and the power part (2) is able to provide three-phase power current signals from the DC current under a high voltage from the box (8).

7. The assembly according to claim 6, **characterized in that** the machine (1) is connected to the external power supply casing (7) through a single common connecting cable (9), integrating an electric connection cable (9a) with high DC voltage conductors for the power, and low voltage conductors for the control, as well as a pneumatic connecting cable (9b) connected on a socket providing compressed air.
